# FASCICULE DE BREVET EUROPEEN

(11) **EP 2 551 188 B1**
(45) Date de publication et mention de la délivrance du brevet: **23.10.2013**
(21) Numéro de dépôt: 12175938.5
(22) Date de dépôt: 11.07.2012
(51) Int. Cl.: B64C 1/12, B64C 1/06, B64C 3/18, B64C 1/00

(54) **Panneau raidi pour aéronef, comprenant des raidisseurs à ames entaillées**
Versteifte Platte für Luftfahrzeuge mit gekerbten Versteifungselementen.
Stiffened panel for aircraft comprising stiffeners with indented webs.

(30) Priorité: 27.07.2011 FR 1156855
(43) Date de publication de la demande: 30.01.2013
(73) Titulaire: Airbus Operations S.A.S., 31060 Toulouse (FR)
(72) Inventeur: Dubost, Jérôme, 31880 La Salvetat Saint Gilles (FR); Lacombe, Jean-Claude, 31700 Blagnac (FR)
(74) Mandataire: Gicquel, Olivier Yves Gérard

(56) Documents cités:
- WO-A1-2010/012913
- US-A1- 2005 247 818

## Description

La présente invention se rapporte au domaine des panneaux raidis, de préférence en matériau composite.

De tels panneaux, qui remplissent une fonction structurale, sont utilisés dans de nombreux domaines techniques, comme l'aéronautique et l'automobile. Ils permettent en particulier de renforcer la résistance au flambage d'un panneau fin. Leur nombre et leur forme sont déterminés de manière à obtenir le meilleur compromis possible en termes de résistance mécanique et de masse.

En particulier, il est connu d'utiliser des raidisseurs de section en forme de T pour raidir un panneau. La semelle est alors fixée et plaquée contre une surface du panneau, et l'âme orientée orthogonalement à la semelle. Le document US2005/0247818, qui montre toutes les caractéristiques du préambule de la revendication 1, décrit un tel raidisseur.

Il existe des situations dans lesquelles la hauteur de l'âme doit être élevée, par exemple pour des besoins de fixation de pièces ou d'équipements dans la partie distale de l'âme, à proximité de son chant longitudinal opposé à celui solidaire de la semelle. Une autre fonction réside dans le fait de créer, avec les parties distales des âmes des raidisseurs, une barrière physique la plus éloignée possible du panneau portant les raidisseurs, dans le but notamment de limiter les chocs sur ce panneau, entre les raidisseurs.

Dans ces circonstances, l'âme des raidisseurs peut présenter une section démesurément élancée qui nuit à sa résistance au flambage, et qui nuit donc à la résistance globale du panneau raidi, dans ce mode de sollicitation. Le compromis résistance mécanique / masse devient alors peu performant.

L'invention a donc pour but de remédier au moins partiellement aux inconvénients mentionnés ci-dessus, relatifs aux réalisations de l'art antérieur.

Pour ce faire, l'invention a pour objet un panneau raidi comprenant un panneau dont au moins l'une des surfaces est équipée de raidisseurs comprenant chacun une semelle plaquée contre ladite surface de panneau ainsi qu'une âme orientée orthogonalement par rapport à la semelle et dont un premier chant longitudinal est solidaire de celle-ci.

Selon l'invention, au moins l'un des raidisseurs comporte une pluralité d'entailles traversant un second chant longitudinal de l'âme opposé au premier chant, pour déboucher vers l'extérieur du raidisseur.

De cette manière, lorsque le panneau raidi en soumis à un mode de sollicitation du type flambage, les efforts de compression circulent dans l'âme du raidisseur dans une partie seulement de la section, à savoir celle dépourvue d'entaille. Cela réduit l'élancement effectif de la section de l'âme dans ce mode de sollicitation, et augmente par conséquent la résistance au flambage du raidisseur.

L'invention apporte une solution astucieuse permettant d'offrir un compromis satisfaisant en termes de résistance au flambage et de masse, tout en conservant, entre les parties entaillées, une hauteur d'âme élevée pouvant être utilisée à des fins diverses, comme cela a été mentionné ci-dessus.

De préférence, chaque entaille présente une hauteur « h », et la distance entre deux entailles directement consécutives est inférieure ou égale à sept fois la valeur de la hauteur « h ». En appliquant cette relation mathématique, lorsque le panneau raidi est soumis à un mode de sollicitation du type flambage, les efforts de compression sont encore mieux confinés dans la partie de la section se trouvant sous les entailles de l'âme du raidisseur. Ces efforts de compression circulent alors en effet uniquement dans la direction longitudinale, selon laquelle les fibres sont préférentiellement orientées lorsque le raidisseur est réalisé en matériau composite.

De préférence, les entailles sont réparties de manière régulière le long de la direction longitudinale de l'âme, même si cela pourrait en être autrement, sans sortir du cadre de l'invention.

De préférence, chaque entaille présente une hauteur qui permet au raidisseur d'assurer la fonction de stabilisation pour laquelle il est installé, sans entraîner un drainage d'effort important. Les valeurs typiques de hauteur d'entaille sont définies de manière à ce que la partie non entaillée de l'âme du raidisseur ait une hauteur de l'ordre de huit fois l'épaisseur.

Préférentiellement, chaque entaille prend une forme droite ou semi-circulaire. Ces formes sont particulièrement faciles à obtenir, par simple usinage d'une âme droite. Néanmoins, d'autres formes sont bien entendu envisageables, sans sortir du cadre de l'invention.

De préférence, chaque raidisseur présente une section en forme de T. Cependant, l'âme pourrait présenter une seconde semelle au niveau de son second chant longitudinal, sans sortir du cadre de l'invention. Dans un tel cas, les entailles traverseraient également cette seconde semelle.

De préférence, ledit panneau et/ou ses raidisseurs sont réalisés dans un matériau composite comprenant des fibres de verre et/ou de carbone mélangées à une résine.

L'invention a également pour objet une case de train d'atterrissage comprenant au moins un panneau raidi tel que défini ci-dessus.

Enfin, l'invention a également pour objet un aéronef comprenant une telle case de train.

D'autres avantages et caractéristiques de l'invention apparaîtront dans la description détaillée non limitative ci-dessous.

Cette description sera faite au regard des dessins annexés parmi lesquels ;
- la figure 1 représente une vue en perspective d'un panneau raidi selon un mode de réalisation préféré de la présente invention ;
- la figure 2 représente une vue en coupe prise le long de la ligne II-II de la figure 3 ;
- la figure 3 représente une vue en coupe prise le long de la ligne III-III de la figure 2 ; et
- la figure 4 représente une vue de côté d'un raidisseur selon une alternative de réalisation, destiné à équiper le panneau raidi montré sur la figure 1.

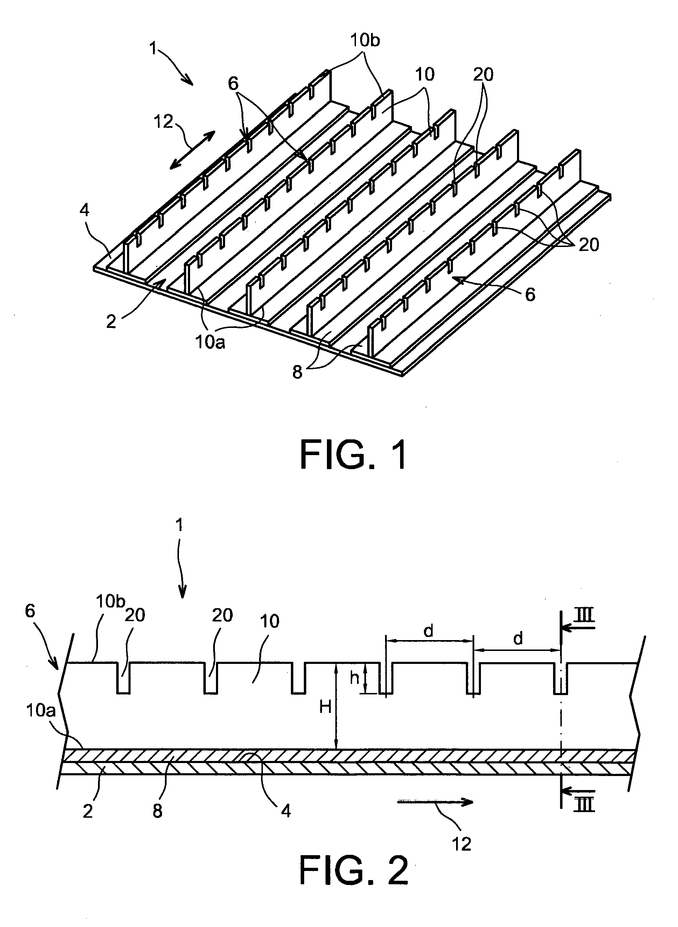

En référence aux figures 1 à 3, il est représenté un panneau raidi 1 selon un mode de réalisation préféré de l'invention, destiné à remplir une fonction structurale.

Ce panneau raidi 1 est préférentiellement destiné à former une case de train d'atterrissage d'aéronef, dans laquelle le train d'atterrissage est logé durant les phases de croisière. Une telle case de train peut être de forme parallélépipédique ou similaire, l'une ou plusieurs de ses faces étant alors constituée par un/des panneaux raidis.

Le panneau raidi 1 comporte un panneau 2, de préférence plan, réalisé en matériau composite comprenant des fibres de verre et/ou de carbone mélangées à une résine, par exemple de la résine Epoxy. Sa superficie peut atteindre plusieurs mètres-carrés, et son épaisseur est faible, de l'ordre de quelques millimètres seulement, par exemple inférieure à 3 mm.

Le panneau 2 présente deux surfaces opposées, dont l'une au moins est équipée de raidisseurs. Ainsi, sur la figure 1, on peut apercevoir que la surface supérieure 4 du panneau 2 reçoit fixement des raidisseurs linéaires 6, qui sont ici disposés parallèlement les uns aux autres, et présentent une section en forme de T renversé.

En effet, chaque raidisseur 6 comporte une semelle 8 formant la tête du T, qui est plaquée et fixée contre la surface 4, en étant orientée parallèlement par rapport à celle-ci. La fixation s'effectue de préférence par collage. De plus, le raidisseur 6 comporte une âme 10 orientée orthogonalement à la semelle 8, et solidaire de celle-ci. Les deux éléments 8, 10 peuvent par exemple être réalisés d'une seule pièce, ou bien alternativement être rapportés fixement l'une sur l'autre.

La jonction s'effectue au niveau d'un premier chant longitudinal 10a de l'âme 10, qui s'étend selon une direction longitudinale 12.

Chaque raidisseur 6 est de préférence réalisé en matériau composite comprenant des fibres de verre et/ou de carbone mélangées à une résine, par exemple de la résine Epoxy. La direction des fibres correspond de préférence à la direction longitudinale 12.

L'une des particularités de la présente invention réside dans le fait que des entailles 20 sont réalisées au niveau du second chant longitudinal 10b de l'âme 10, opposé au premier chant longitudinal 10a. Plus précisément, chaque entaille 20 est pratiquée dans toute l'épaisseur de l'âme 10, sur une partie haute de celle-ci, et s'étend dans la direction opposée à celle dans laquelle se trouve le panneau 2, jusqu'à traverser le second chant 10b. Elle débouche donc en dehors du raidisseur, vers le haut sur les figures.

Les entailles 20 sont de préférence régulièrement réparties le long de la direction 12, et présentent des formes et dimensions identiques. Ici, chaque entaille 20 est droite, orthogonale à la surface 4 du panneau 2. Elle s'étend sur une hauteur « h » correspondant à une fraction de la hauteur totale « H » de l'âme. Il est de préférence fait en sorte que la partie non entaillée de l'âme du raidisseur ait une hauteur « H-h » de l'ordre de huit fois l'épaisseur.

Typiquement, l'épaisseur de l'âme et de la semelle du raidisseur est identique ou similaire à celle du panneau 2 sur lequel il est fixé.

De plus, lors de la sollicitation en flambage du panneau raidi 1, afin de permettre un confinement très satisfaisant des efforts de compression dans la partie de la section de l'âme située sous les entailles, il est fait en sorte que la distance « d » entre deux entailles 20 quelconques et directement consécutives selon la direction 12, soit inférieure ou égale à sept fois la valeur de la hauteur « h » de ces entailles 20.

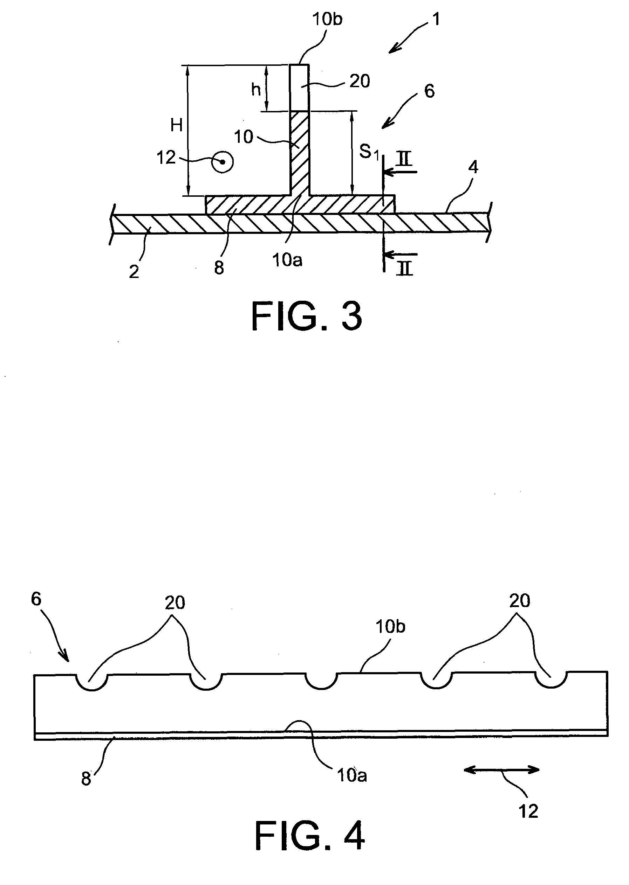

La partie de la section effectivement travaillante de l'âme dans ce mode de sollicitation en flambage a été référencée S1 sur la figure 3. Elle présente une hauteur inférieure à la hauteur totale « H » de l'âme, ce qui permet de réduire son élancement effectif dans ce mode de sollicitation, et augmente par conséquent la résistance au flambage du raidisseur.

La figure 4 représente une alternative de réalisation pour les raidisseurs 6, dans laquelle les entailles présentent une forme semi-circulaire.

Bien entendu, diverses modifications peuvent être apportées par l'homme du métier à l'invention qui vient d'être décrite, uniquement à titre d'exemple non limitatif. En particulier, la forme des entailles 20 peut être adaptée aux besoins rencontrés.

## Revendications

1. Panneau raidi (1) comprenant un panneau (2) dont au moins l'une des surfaces (4) est équipée de raidisseurs (6) comprenant chacun une semelle (8) plaquée contre ladite surface de panneau (4) ainsi qu'une âme (10) orientée orthogonalement par rapport à la semelle et dont un premier chant longitudinal (10a) est solidaire de celle-ci,
**caractérisé en ce qu'**au moins l'un des raidisseurs (6) comporte une pluralité d'entailles (20) traversant un second chant longitudinal (10b) de l'âme opposé au premier chant (10a), pour déboucher vers l'extérieur du raidisseur.

2. Panneau raidi selon la revendication 1, **caractérisé en ce que** chaque entaille (20) présente une hauteur « h », et **en ce que** la distance « d » entre deux entailles (20) directement consécutives est inférieure ou égale à sept fois la valeur de la hauteur « h ».

3. Panneau raidi selon la revendication 1 ou la revendication 2, **caractérisé en ce que** les entailles (20) sont réparties de manière régulière le long de la direction longitudinale (12) de l'âme.

4. Panneau raidi selon l'une quelconque des revendications précédentes, **caractérisé en ce que** chaque entaille (20) prend une forme droite ou semi-circulaire.

5. Panneau raidi selon l'une quelconque des revendications précédentes, **caractérisé en ce que** chaque raidisseur (6) présente une section en forme de T.

6. Panneau raidi selon l'une quelconque des revendications précédentes, **caractérisé en ce que** ledit panneau et/ou ses raidisseurs sont réalisés dans un matériau composite comprenant des fibres de verre et/ou de carbone mélangées à une résine.

7. Case de train d'atterrissage comprenant au moins un panneau raidi (1) selon l'une quelconque des revendications précédentes.

8. Aéronef comprenant une case de train selon la revendication 7.

## Patentansprüche

1. Versteifte Platte (1), die eine Platte (2) enthält, von der mindestens eine der Flächen (4) mit Versteifungen (6) ausgestattet ist, die je eine gegen die Plattenfläche (4) gedrückte Grundplatte (8) sowie einen Mittelteil (10) enthalten, der orthogonal bezüglich der Grundplatte ausgerichtet und von dem eine erste Längskante (10a) mit dieser fest verbunden ist, **dadurch gekennzeichnet, dass** mindestens eine der Versteifungen (6) eine Vielzahl von Einschnitten (20) aufweist, die eine zweite Längskante (10b) des Mittelteils entgegengesetzt zur ersten Kante (10a) durchqueren, um außerhalb der Versteifung zu münden.

2. Versteifte Platte nach Anspruch 1, **dadurch gekennzeichnet, dass** jeder Einschnitt (20) eine Höhe "h" aufweist, und dass der Abstand "d" zwischen zwei direkt aufeinander folgenden Einschnitten (20) geringer als oder gleich dem siebenfachen Wert der Höhe "h" ist.

3. Versteifte Platte nach Anspruch 1 oder Anspruch 2, **dadurch gekennzeichnet, dass** die Einschnitte (20) gleichmäßig entlang der Längsrichtung (12) des Mittelteils verteilt sind.

4. Versteifte Platte nach einem der vorhergehenden Ansprüche, **dadurch gekennzeichnet, dass** jeder Einschnitt (20) eine gerade oder halbkreisförmige Form annimmt.

5. Versteifte Platte nach einem der vorhergehenden Ansprüche, **dadurch gekennzeichnet, dass** jede Versteifung (6) einen T-förmigen Querschnitt aufweist.

6. Versteifte Platte nach einem der vorhergehenden Ansprüche, **dadurch gekennzeichnet, dass** die Platte und/oder ihre Versteifungen aus einem Verbundmaterial hergestellt werden, das Glasfasern und/oder Kohlenstofffasern vermischt mit einem Harz enthält.

7. Fahrwerkkasten, der mindestens eine versteifte Platte (1) nach einem der vorhergehenden Ansprüche enthält.

8. Luftfahrzeug, das einen Fahrwerkkasten nach Anspruch 7 enthält.

## Claims

1. Stiffened panel (1) comprising a panel (2), at least one of the surfaces (4) of which is equipped with stiffeners (6) that each comprise a foot (8) pressed against said panel surface (4) and also a web (10) which is oriented orthogonally with respect to the foot and a first longitudinal edge (10a) of which is secured to the latter,
**characterized in that** at least one of the stiffeners (6) has a plurality of notches (20) passing through a second longitudinal edge (10b), opposite the first edge (10a), of the web, so as to open towards the outside of the stiffener.

2. Stiffened panel according to Claim 1, **characterized in that** each notch (20) has a height "h", and **in that** the distance "d" between two directly consecutive notches (20) is less than or equal to seven times the value of the height "h".

3. Stiffened panel according to Claim 1 or Claim 2, **characterized in that** the notches (20) are distributed regularly in the longitudinal direction (12) of the web.

4. Stiffened panel according to any one of the preceding claims, **characterized in that** each notch (20) has a straight or semicircular shape.

5. Stiffened panel according to any one of the preceding claims, **characterized in that** each stiffener (6) has a T-shaped cross section.

6. Stiffened panel according to any one of the preceding claims, **characterized in that** said panel and/or the stiffeners thereof are produced from a composite material comprising glass fibres and/or carbon fibres mixed with a resin.

7. Landing gear bay comprising at least one stiffened panel (1) according to any one of the preceding claims.

8. Aircraft comprising a landing gear bay according to Claim 7.
